# EUROPÄISCHE PATENTSCHRIFT

(11) **EP 1 549 861 B1**
(45) Veröffentlichungstag und Bekanntmachung des Hinweises auf die Patenterteilung: **03.12.2008**
(21) Anmeldenummer: 03788927.6
(22) Anmeldetag: 30.09.2003
(51) Int. Cl.: F16B 19/12

(54) **PYROMECHANISCHES BEFESTIGUNGSELEMENT**
PYROMECHANICAL FASTENING ELEMENT
ELEMENT DE FIXATION PYROMECANIQUE

(30) Priorität: 02.10.2002 DE 10246028; 21.08.2003 DE 10338394
(43) Veröffentlichungstag der Anmeldung: 06.07.2005
(73) Patentinhaber: Delphi Technologies, Inc., Troy, MI 48007-5052 (US)
(72) Erfinder: BREDE, Uwe, 90765 Fuerth (DE); LORENZ, Heinrich, 38448 Wolfsburg (DE); JACOB, Henning, 29386 Hankersbüttel (DE); KEMPE, Ulrich, 38100 Braunschweig (DE); KAUTZ, Udo, 38165 Lehre (DE)
(74) Vertreter: Denton, Michael John
(86) Internationale Anmeldenummer: PCT/EP2003/010828
(87) Internationale Veröffentlichungsnummer: WO 2004/033922

(56) Entgegenhaltungen:
- GB-A- 595 276
- GB-A- 1 115 197
- US-A- 2 807 184
- US-A- 2 842 022

## Beschreibung

Die Erfindung betrifft ein pyromechanisches Befestigungselement zur unlösbaren festen mechanischen Verbindung zweier Bauteile.

Bei der Montage mechanischer Bauelemente werden vorzugsweise Verbindungen mit Schrauben und Muttern hergestellt. Speziell im Automobilbau sind jedoch oft schwer zugängliche Positionen der zu verbindenden Teile gegeben, so dass ein erheblicher Aufwand an Vorrichtungen, Schraubrobotern und Montageanlagen benötigt wird.

Ein wesentlicher Fortschritt könnte erzielt werden, wenn vor allem Teile, deren Verbindungspositionen praktisch nicht zugänglich sind, mit Befestigungselementen versehen sind, die sich nach dem Fügen aktivieren lassen und infolge einer Formänderung ein Verklemmen, Vernieten oder Verspannen der Bauteile bewirken.

Ein Befestigungselement nach dem Oberbegriff des Anspruchs 1 ist aus der US-A-2807184 bekannt.

Der Erfindung liegt daher die Aufgabe zugrunde, ein pyrotechnisch wirkendes Befestigungselement zu entwickeln, das nach einer gezielten Auslöseenergiezufuhr infolge des Druckaufbaus einer pyrotechnischen Explosivstoffladung so verformt oder verändert wird, dass Bauteile unlösbar fest miteinander verbunden sind.

Die Lösung dieser Aufgabe erfolgt durch die Merkmale des Anspruchs 1.

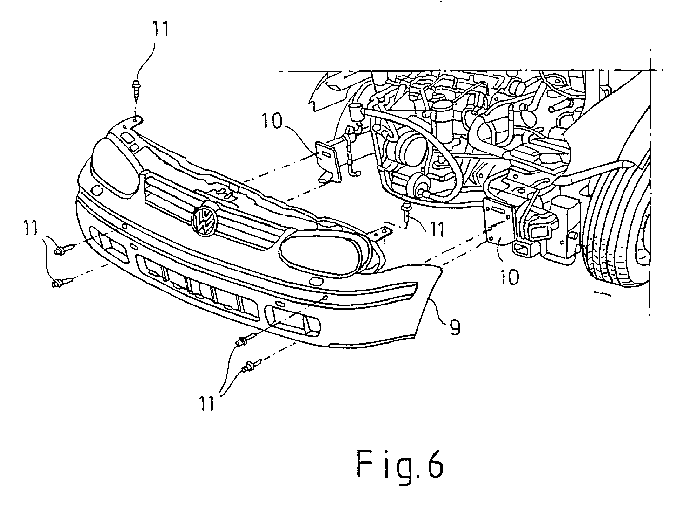

Zum besseren Verständnis zeigt Fig. 6 am Beispiel eines Stoßfängerfrontendmoduls 9 eines Kraftfahrzeugs das technische Montageproblem der schwer zugänglichen Verschraubung mit Schrauben 11.

Das komplett bestückte Stoßfängermodul 9 wird hier an die Schottplatten 10 gefahren und mit Roboterhilfe verschraubt. Diese Montage ist teuer und zeitaufwendig.

Eine weitere Aufgabe der Erfindung ist es, ein Befestigungselement zu finden, das für schwer zugängliche Montagepositionen ohne Werkzeugeinsatz eine feste mechanische Verbindung ermöglicht.

Gleichzeitig sollte das Element so geformt sein, dass es einerseits an einem der zu fügenden Bauelemente fest vormontiert werden kann und andererseits ein Justieren des anderen Bauelements zulässt.

Die Erfindung zeichnet sich dadurch aus, dass das Befestigungselement aus einem metallischen Mantel besteht, in dessen Kopfteil eine pyrotechnische Treibladung angeordnet ist, die an einen Adapter angrenzt und am hinteren Teil des Mantels angrenzend an den Adapter ein Befestigungsmittel für ein erstes Bauteil angeordnet ist und zwischen dem ersten Bauteil und dem Adapter ein zweites Bauteil aufschiebbar ist, wobei der Mantel an seinem Kopfteil in Längsrichtung verlaufende Sollbruchkerben aufweist, die bei Zündung der Treibladung den Mantel aufreißen und um den Adapter umbiegen lassen, wodurch das erste Bauteil mit dem zweiten Bauteil fest verbunden ist.

Zur Suchhilfe bei der späteren Anwendung ist das Kopfteil des Mantels bevorzugt konisch ausgebildet.

Der Mantel des Befestigungselements ist vorteilhaft im Tiefziehverfahren hergestellt, wobei der Adapter mit Presssitz im Mantel eingebettet ist.

Zur einfachen Anzündung der pyrotechnischen Treibladung ist vorteilhafterweise die Treibladung mit einer punktförmigen Wärmequelle anzündbar, wobei die Wärmequelle bevorzugt ein Laserstrahl eines Lasers ist.

Das Befestigungsmittel für das erste Bauteil ist bevorzugt ein Bördelrand. Es kann jedoch auch jede andere Befestigungsart verwendet werden.

Um auch ungenauere Fügeteile verbinden zu können, ist vorteilhafterweise angrenzend an das zweite Bauteil eine schwimmende Scheibe als Gegenlager auf den Adapter aufgeschoben.

Nachfolgend wird die Erfindung an Hand von Ausführungsbeispielen beschrieben.

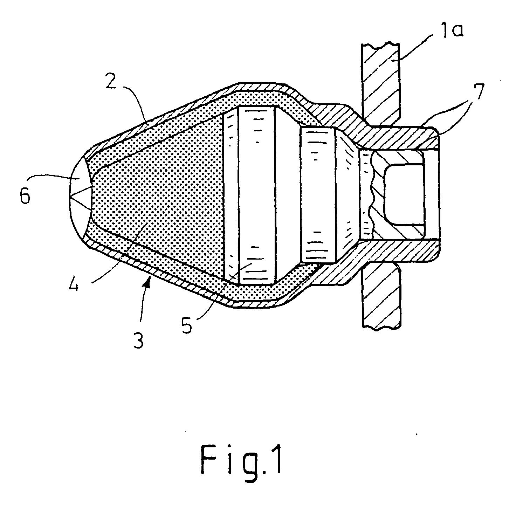

Fig. 1 zeigt eine typische Prinziplösung des erfindungsgemäßen "Pyromechanischen Befestigungselementes":

Das pyromechanische Befestigungselement besteht aus einem nach dem Tiefziehverfahren hergestellten Mantel 2 mit konischem Kopfteil 3 als Suchhilfe bei der späteren Anwendung. Der Mantel 2 besitzt Sollbruchkerben 6, die ein gezieltes Aufreißen gewährleisten. Im vorderen Bereich ist der Treibsatz 4 angeordnet. Ein Adapter 5 schließt mit Presssitz die Ladungskammer ab. Nach dem Laden des Treibsatzes 4 und Einpressen des Adapters 5 wird der Mantel 2 am hinteren Bereich formschlüssig auf den Adapter 5 gedrückt. Das Element ist damit zur Vormontage an einem Bauteil 1a vorbereitet. Zur Befestigung des ersten Bauteils 1a ist ein Bördelrand 7 vorgesehen.

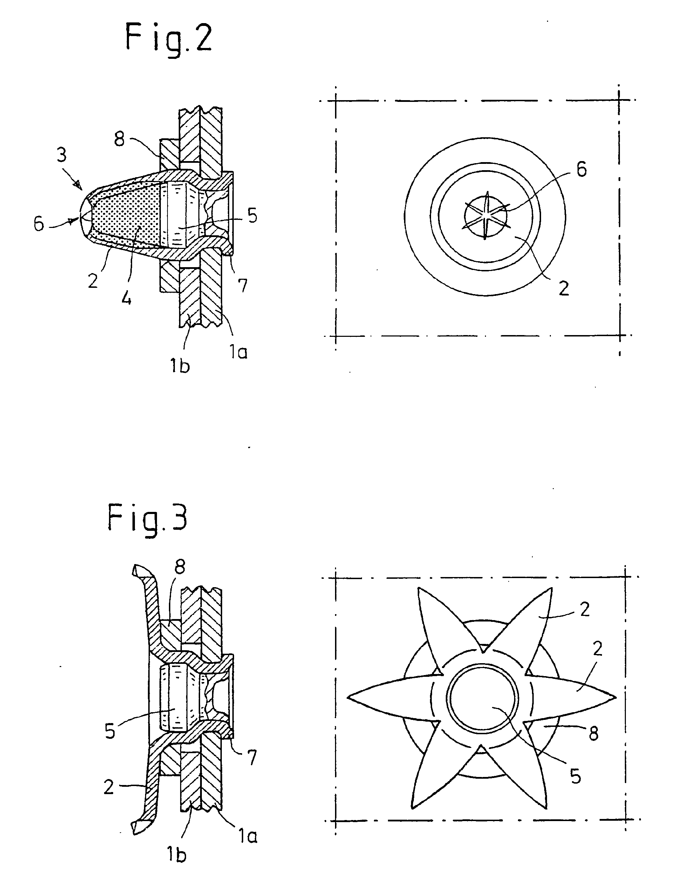

Die Fig. 2 (Ausführungsbeispiel 1) zeigt das erfindungsgemäße Befestigungselement vormontiert an einem Schottplattenblech als erstes Bauteil 1a und mit aufgeschobenem zweiten Bauteil 1b und schwimmender Scheibe 8 als Gegenlager. Figur 3 zeigt das Befestigungselement nach der Auslösung der Treibladung 4, wodurch sich eine Vernietung ergibt.

### Funktion:

Wird nach dem Fügen der Blech-/Bauelementeteile das pyromechanische Befestigungselement mit einer punktförmig wirkenden Wärmequelle (z. B. Laser) beaufschlagt, deren Leistungsdichte so hoch ist, dass sie den Mantel 2 punktförmig zum Glühen bringt, entzündet sich die Treibladung 4. Je nach Art der pyrotechnischen Treibladung wird, zeitlich gesteuert, ein schneller Hochdruck erzeugt. Die vorgekerbten Spreizelemente des Mantels 2 werden hoch beschleunigt und biegen sich infolge des gezielt ausgewählten Materials scharf um. Der vorher lose Verbund wird praktisch vernietet. Es kann, wie im Beispiel Fig. 2 und Fig. 3 gezeigt, von Vorteil sein, eine sogenannte "schwimmende Scheibe" 8 als Gegenhalter vorzusehen, um auch ungenauere Fügeteile zu verwenden.

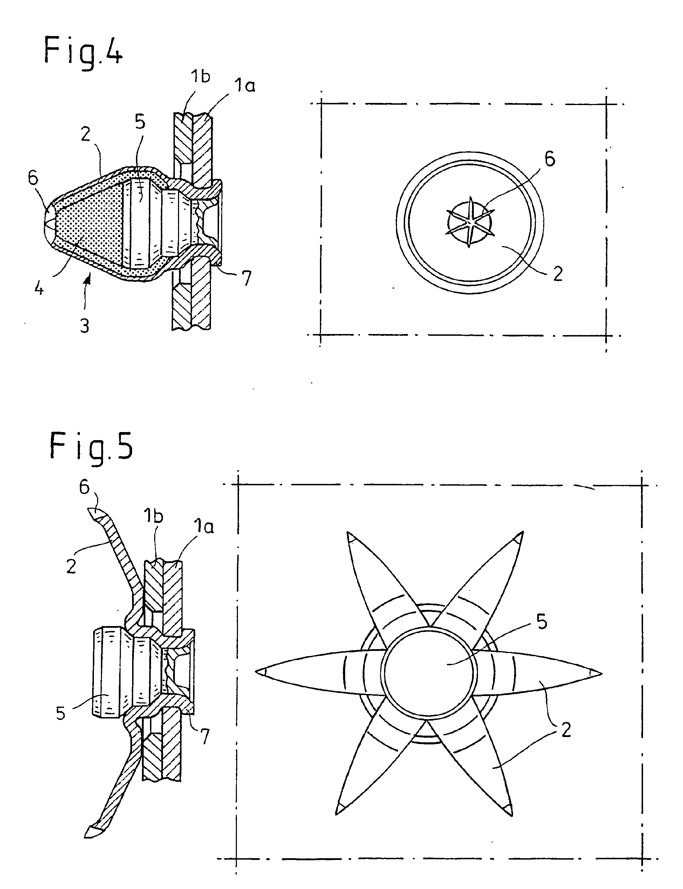

Die Figuren 4 und 5 zeigen die Wirkung des Befestigungselementes ohne Gegenhaltescheibe.

## Patentansprüche

1. Pyromechanisches Befestigungselement zur unlösbaren festen mechanischen Verbindung zweier Bauteile (1a, 1b), das aus einem metallischen Mantel (2) besteht, in dessen Kopfteil (3) eine pyrotechnische Treibladung (4) angeordnet ist, **dadurch gekennzeichnet, dass** die Treibladung an einen Adapter (5) angrenzt und am hinteren Teil des Mantels (2) angrenzend an den Adapter (5) ein Befestigungsmittel für ein erstes Bauteil (1 a) angeordnet ist und über den Kopfteil (3) und den darin angeordneten Adapter (5) ein zweites Bauteil (1 b) aufschiebbar ist, wobei der Mantel (2) an seinem Kopfteil (3) in Längsrichtung verlaufende Sollbruchkerben (6) aufweist, die bei Zündung der Treibladung (4) den Mantel (2) aufreißen und um den Adapter (5) umbiegen lassen, wodurch das erste Bauteil (1 a) mit dem zweiten Bauteil (1 b) fest verbunden ist.

2. Befestigungselement nach Anspruch 1, **dadurch gekennzeichnet, dass** das Kopfteil (3) des Mantels (2) konisch ausgebildet ist.

3. Befestigungselement nach Anspruch 1 oder 2, **dadurch gekennzeichnet, dass** der Mantel (2) im Tiefziehverfahren hergestellt ist.

4. Befestigungselement nach einem der Ansprüche 1 bis 3, **dadurch gekennzeichnet, dass** der Adapter (5) mit Presssitz im Mantel (2) eingebettet ist.

5. Befestigungselement nach einem der Ansprüche 1 bis 4, **dadurch gekennzeichnet, dass** die pyrotechnische Treibladung (4) mit einer punktförmigen Wärmequelle anzündbar ist.

6. Befestigungselement nach Anspruch 5, **dadurch gekennzeichnet, dass** die Wärmequelle ein Laserstrahl eines Lasers ist.

7. Befestigungselement nach einem der Ansprüche 1 bis 6, **dadurch gekennzeichnet, dass** das Befestigungsmittel ein Bördelrand (7) ist.

8. Befestigungselement nach einem der Ansprüche 1 bis 7, **dadurch gekennzeichnet, dass** angrenzend an das zweite Bauteil (16) eine schwimmende Scheibe (8) als Gegenlager auf den Adapter (5) aufgeschoben ist.

## Claims

1. Pyromechanical fastening element for the non-detachable fixed mechanical connection of two components (1a, 1b) consisting of a metallic shell (2) in whose head section (3) a pyrotechnic propellant charge (4) is arranged, **characterised in that** the propellant charge adjoins an adapter (5) and on the rear section of the shell (2) adjoining the adapter (5) a fastening means for a first component (1a) is arranged and via the head section (3) and the adapter (5) arranged therein a second component (1b) can be pushed on, wherein the shell (2) has on its head section (3) predetermined breaking notches (6) running in the longitudinal direction which on ignition of the propellant charge (4) tear the shell (2) open and have it bend round the adapter (5) as a result of which the first component (1a) is firmly connected to the second component (1b).

2. Fastening element according to claim 1, **characterised in that** the head section (3) of the shell (2) is of conical construction.

3. Fastening element according to claim 1 or 2, **characterised in that** the shell (2) is produced by deep drawing.

4. Fastening element according to any of claims 1 to 3, **characterised in that** the adapter (5) is embedded in the shell (2) by means of a press-fit seating.

5. Fastening element according to any of claims 1 to 4, **characterised in that** the pyrotechnic propellant charge (4) is ignitable by means of a punctiform heat source.

6. Fastening element according to claim 5, **characterised in that** the heat source is the laser beam of a laser.

7. Fastening element according to any of claims 1 to 6, **characterised in that** the fastening means is a crimped border (7).

8. Fastening element according to any of claims 1 to 7, **characterised in that** adjoining the second component (1b) a floating washer (8) is pushed on to the adapter (5) as a counter-support.

## Revendications

1. Élément de fixation pyromécanique pour la liaison mécanique fixe non détachable de deux composants (1a, 1b), constitué par une enveloppe métallique (2) dans la partie de tête (3) de laquelle est agencée une charge propulsive pyrotechnique (4),
**caractérisé en ce que** la charge propulsive est adjacente à un adaptateur (5) et il est prévu à la partie postérieure de l'enveloppe (2) un organe de fixation pour un premier composant (1a), agencé adjacent à l'adaptateur (5), et un second composant (1b) est susceptible d'être enfilé par-dessus la partie de tête (3) et l'adaptateur (5) agencé dans celle-ci, et **en ce que** l'enveloppe (2) présente sur sa partie de tête (3) des entailles de rupture de consigne (6) qui s'étendent en direction longitudinale et qui déchirent l'enveloppe (2) lors de l'allumage de la charge propulsive (4) et font cintrer l'adaptateur (5), grâce à quoi le premier composant (1a) est relié fermement avec le second composant (1b).

2. Élément de fixation selon la revendication 1, **caractérisé en ce que** la partie de tête (3) de l'enveloppe (2) est réalisée conique.

3. Élément de fixation selon la revendication 1 ou 2, **caractérisé en ce que** l'enveloppe (2) est produite par un processus d'emboutissage profond.

4. Élément de fixation selon l'une des revendications 1 à 3, **caractérisé en ce que** l'adaptateur (5) est noyé dans l'enveloppe (2) par engagement à la presse.

5. Élément de fixation selon l'une des revendications 1 à 4, **caractérisé en ce que** la charge propulsive pyrotechnique (4) est susceptible d'être allumée avec une source de chaleur de forme ponctuelle.

6. Élément de fixation selon la revendication 5, **caractérisé en ce que** la source de chaleur est un faisceau d'un laser.

7. Élément de fixation selon l'une des revendications 1 à 6, **caractérisé en ce que** l'organe de fixation est une bordure rabattue (7).

8. Élément de fixation selon l'une des revendications 1 à 7, **caractérisé en ce qu'**un disque flottant (8) est enfilé sur l'adaptateur (5), à titre de contrebutée, en situation adjacente au second composant (16).
